# DEMANDE DE BREVET EUROPEEN

(11) **EP 4 468 090 A1**
(43) Date de publication de la demande: **27.11.2024**
(21) Numéro de dépôt: 24170033.5
(22) Date de dépôt: 12.04.2024
(51) Int. Cl.: G04B 19/12, G04B 45/00

(54) **PROCÉDÉ DE FABRICATION D'UN CADRAN D'UNE MONTRE**

(30) Priorité: 25.05.2023 EP 23175384
(71) Demandeur: Omega SA, 2502 Bienne (CH)
(72) Inventeur: LAISSUE, Sébastien, 25370 Métabief (FR); SAURET, Pierre, 2208 Les Hauts-Geneveys (CH); POLY, Giovanni, 25140 Charquemont (FR); JEANRENAUD, Frédéric, 2300 La Chaux-de-Fonds (CH); KISSLING, Gregory, 2520 La Neuveville (CH)
(74) Mandataire: ICB SA

(57) **Abrégé**

Un aspect de l'invention concerne un procédé de fabrication d'un cadran (2) de montre (1) comportant une face visible (11) ayant une surface exiguë, ladite face (11) comprenant une représentation tridimensionnelle (3) d'un paysage notamment une carte topographique de ce paysage, le procédé comprenant les étapes suivantes :
- élaboration (20) d'une ébauche (12) de ce cadran (2) comprenant une face supérieure (13) pourvue d'une structure tridimensionnelle (5) relative à ladite représentation tridimensionnelle (3) du paysage, ladite étape d'élaboration (20) comprenant une sous-étape de génération (22) de données topographiques de construction de ladite structure tridimensionnelle 5 dans cette face supérieure (13) ;
- traitement (29) d'une surface (14) de cette structure tridimensionnelle (5) de la face supérieure (13) de l'ébauche (12) lors de laquelle au moins une caractéristique d'aspect de cette surface (14) est modifiée en prévision de l'obtention de la représentation tridimensionnelle (3) ;
- terminaison (35) de l'ébauche (12) en vue d'obtenir le cadran. (2).

## Description

### Domaine technique de l'invention

La présente invention concerne un procédé de fabrication d'un cadran d'une montre comportant un décor incluant une représentation tridimensionnelle d'un paysage.

L'invention concerne également un tel cadran ainsi qu'une montre pourvue de ce cadran.

### Arrière-plan technologique

Pour mettre en valeur les composants d'affichage classiques, certaines montres comportent un cadran pourvu sur sa face visible d'un décor tridimensionnel qui confère une personnalité particulière à cette montre. Un tel décor comprend classiquement des reliefs pouvant avoir des formes géométriques. Un cadran de ce type est généralement fabriqué à partir de procédés prévoyant une étape d'usinage dans le matériau de base du cadran tel que les alliages de cuivres, de fer, d'aluminium, les polymères, la pierre, la céramique ou tout autres matériaux connu de l'homme du métier, pour obtenir la forme tridimensionnelle, suivi par des étapes de polissage, d'émaillage et/ou de coloration.

Toutefois ces procédés restent insatisfaisants au regard d'exigences de plus en plus élevées en matière d'aspect esthétique des cadrans et au regard de la présence potentielle de défaut ou de bavure sur ces cadrans à la suite de la réalisation des étapes de meulage et de coloration. De plus, les possibilités de décoration offertes par les procédés existants se limitent à un choix restreint parmi quelques procédés anciens et bien connus, ce qui ne permet pas d'offrir des cadrans ayant une décoration originale.

Dans ce contexte, il existe alors un besoin de trouver une solution afin d'améliorer l'état de la technique.

### Résumé de l'invention

L'invention a pour objectif général d'offrir une solution améliorée et simplifiée pour fabriquer un cadran d'aspect esthétique attractif, comprenant un décor tridimensionnel, et qui ne comprend pas tout ou une partie des inconvénients de l'état de la technique.

Dans ce dessein, l'invention concerne un procédé de fabrication d'un cadran de montre comportant une face visible ayant une surface exiguë, ladite face comprenant une représentation tridimensionnelle d'un paysage notamment une carte topographique de ce paysage, le procédé comprenant les étapes suivantes :
- élaboration d'une ébauche de ce cadran comprenant une face supérieure pourvue d'une structure tridimensionnelle relative à ladite représentation tridimensionnelle du paysage, ladite étape d'élaboration comprenant une sous-étape de génération de données topographiques de construction de ladite structure tridimensionnelle dans cette face supérieure ;
- traitement d'une surface de cette structure tridimensionnelle de la face supérieure de l'ébauche lors de laquelle au moins une caractéristique d'aspect de cette surface est modifiée en prévision de l'obtention de la représentation tridimensionnelle ;
- terminaison de l'ébauche en vue d'obtenir le cadran.

Dans d'autres modes de réalisation :
- la sous-étape de génération comprend une phase d'obtention desdites données topographiques de construction à partir d'un traitement de données topographiques brutes relatives audit paysage, réalisé par un algorithme de génération de données topographiques de construction exécuté par un contrôleur d'un système de génération de telles données ;
- ladite phase d'obtention mettant en oeuvre des opérations de calcul pour la détermination des données topographiques de construction en fonction de la dimension de la surface de la face supérieure de l'ébauche, de la forme essentielle de cette surface, de la nature du matériau du substrat constituant cette ébauche et de caractéristiques de perception visuelle par un observateur de la structure tridimensionnelle de la face supérieure constituant la représentation tridimensionnelle dudit paysage ;
- ladite phase d'obtention mettant en oeuvre une opération de modification des valeurs des données topographiques brutes engendrant une variation des dimensions de différentes zones de cette structure à savoir des zones planes, en relief et/ou en creusure ;
- l'étape d'élaboration comprend une sous-étape de réalisation de la structure tridimensionnelle dans la face supérieure de l'ébauche, ladite sous-étape comprenant une phase de structuration de la face supérieure de l'ébauche à partir des données topographiques de construction obtenues ;
- l'étape de traitement comprend une sous-étape de modification de l'état de surface de tout ou partie de la structure tridimensionnelle ;
- l'étape de traitement comprend une sous-étape de dépôt d'un revêtement sur la surface de tout ou partie de la structure tridimensionnelle ;
- une étape de réalisation d'au moins un motif sur la surface traitée de la structure tridimensionnelle ;
- une étape d'encapsulation de tout ou partie de la surface de la structure tridimensionnelle ;
- ledit paysage reproduit est un paysage réel et/ou un paysage existant ;
- la surface exiguë présente une aire comprise entre 700 et 1700 mm².

Un autre aspect de l'invention concerne un cadran comportant une face visible comprenant une représentation tridimensionnelle d'un paysage, susceptible d'être obtenu à partir d'un tel procédé.

Un autre aspect de l'invention concerne une montre comportant un tel cadran.

Avantageusement, la montre est une montre bracelet.

### Brève description des figures

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 représente sous forme de logigramme les étapes essentielles d'un procédé de fabrication d'un cadran pour une montre, le cadran comportant une face visible pourvue d'un décor comprenant une représentation tridimensionnelle d'un paysage, ledit paysage pouvant être réel ou existant, selon un mode de réalisation de l'invention ;
- la figure 2 représente la montre comportant un tel cadran, selon le mode de réalisation de l'invention ;
- la figure 3 est une vue en coupe selon la ligne III-III du cadran de la montre, selon le mode de réalisation de l'invention ;
- la figure 4 est une vue similaire à celle de la figure 3 se rapportant cette fois-ci à une ébauche du cadran pourvue d'une structure tridimensionnelle relative à la représentation tridimensionnelle du paysage, selon le mode de réalisation de l'invention ;
- la figure 5 est une vue similaire à celle de la figure 4 relative à l'ébauche comportant un revêtement couvrant une surface de la structure tridimensionnelle, selon le mode de réalisation de l'invention ;
- la figure 6 est une vue similaire à celle de la figure 5 relative à l'ébauche comportant un motif réalisé sur le revêtement de la surface de la structure tridimensionnelle, selon le mode de réalisation de l'invention.

### Description détaillée de l'invention

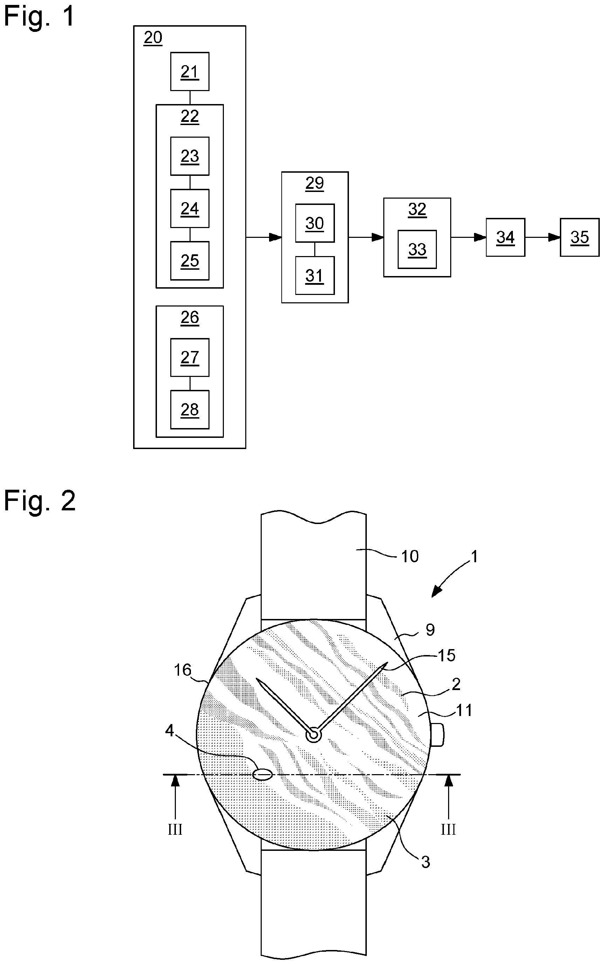

En référence aux figures 1 à 6, l'invention porte sur un procédé de fabrication d'un cadran 2 d'une montre 1. Une telle montre 1 est notamment une montre bracelet comportant un boitier 16 dans lequel sont logés un mouvement et un dispositif d'affichage comportant ce cadran 2 et des aguilles 15. Cette montre bracelet 1 est portée autour du poignet du porteur de cette montre 1.

Le boitier 16 de cette montre 1 comprend aussi une carrure 9 à laquelle est relié un bracelet 10. Dans cette montre 1, un tel cadran 2 est agencé dans le boitier 16 et comprend une face visible 11 ayant une surface exiguë. Une telle surface a des dimensions très réduites. Cette surface exiguë a une aire comprise de préférence entre 700 et 1700 mm². Cette surface est restreinte par le boitier 16 de la montre 1. Autrement dit, cette surface est dite restreinte par ce boitier 16 car le cadran 2, ou encore la face visible 11, est entouré (e) par une paroi périphérique intérieure d'une enceinte de ce boitier 16. On comprend que le cadran 2 de l'invention est un cadran pour montre c'est-à-dire qu'il est configuré pour être monté dans un objet, ici la montre, qui est destiné à être emportée/portée par un individu lors de déplacements sans que le fonctionnement de cette montre ne soit altéré.

Ce cadran 2 est particulier en ce qu'il comprend une face visible 11 pourvue d'un décor tridimensionnel comportant une représentation tridimensionnelle 3 plus précisément une représentation d'une carte topographique relative à un paysage. Autrement dit, cette représentation tridimensionnelle 3 est une carte topographique 3 d'un paysage.

Un tel paysage est de préférence un paysage réel ou existant présent dans la nature. Ce paysage est constitué par l'ensemble des éléments observables à partir d'un lieu précis. Autrement dit, il s'agit ici de l'aspect visible d'un espace géographique. Un tel paysage peut être de manière non limitative et non exhaustive, un paysage terrestre tel qu'une chaîne de montagnes ou encore un paysage sous-marin tel qu'une fosse océanique. Un tel paysage peut comprendre de manière non limitative et non exhaustive : des reliefs, des cavités, la présence d'eau et/ou de la végétation, etc.

Ainsi que nous l'avons évoqué, la représentation tridimensionnelle 3 de ce paysage est réalisée sur la face visible 11 de ce cadran 2. Cette face visible 11 correspond à la face du cadran 2 qui sera observable/visible par l'utilisateur portant une telle montre 1 lorsque ce cadran 2 sera monté dans le boitier 16 de la montre 1.

La représentation tridimensionnelle 3 de ce paysage réalisée sur/dans cette face visible 11 est fidèle au paysage réel ou existant qu'elle tend à reproduire sur ce cadran 2 sous la forme de la carte topographique. En effet, la reproduction sur ce cadran 2 de ce paysage existant est réalisée à partir de données topographiques correspondant à ou décrivant ce paysage. De telles données peuvent être appelées « données *topographiques de* paysage » ou encore « *données topographiques brutes ».* De telles données comprennent des mesures provenant d'un levé topographique. Ces mesures ont été récoltées directement sur le terrain en rapport avec ce paysage, en prévision de leur transcription notamment sur ce cadran 2. De telles mesures comprennent de manière non limitative et non exhaustive, deux composantes :
- une composante planimétrique mesurée lors d'un levé planimétrique qui permet de déterminer la position d'un point dans un plan horizontal, et
- une composante altimétrique mesurée lors d'un levé altimétrique qui donne la position de ce même point au-dessus ou au-dessous d'un plan horizontal de référence.

On notera que cette représentation tridimensionnelle 3 est réalisée sur sensiblement toute la surface de la face visible 11 de ce cadran 2. Plus précisément, cette représentation 3 est réalisée sur 80% ou 90% de cette surface de la face visible 11 voire sur toute la surface de la face visible 11. Autrement dit, cette représentation tridimensionnelle 3 occupe entre 15% et 100% de la face visible 11 de ce cadran 2.

Une telle reproduction de ce paysage sur le cadran 2 est dite réversible car elle constitue une représentation 3 fidèle/exacte de ce paysage à une échelle de dimensions du cadran 2 de la montre 1 et ce, en respectant de manière précise ces données topographiques. Autrement dit, en partant de mesures effectuées directement sur cette représentation tridimensionnelle 3, il est alors possible d'obtenir les dimensions réelles des éléments constitutifs du paysage reproduit sur ce cadran 2 ou encore de reproduire ce paysage à une autre échelle de dimensions en restant fidèle aux dimensions réelles de ce paysage.

Dans le présent mode de réalisation, le procédé de fabrication comprend alors une étape d'élaboration 20 d'une ébauche 12 de ce cadran 2 de la montre 1, ladite ébauche 12 comprenant une structure tridimensionnelle 5 relative à ladite représentation tridimensionnelle 3 du paysage.

On notera que dans cette ébauche 12, la face supérieure 13 correspond à la face visible 11 du cadran 2 à fabriquer.

Une telle étape 20 comprend une sous-étape de mise à disposition 21 d'un substrat constituant cette ébauche 12. Ce substrat présente de préférence les formes et dimensions finales du cadran 2 à fabriquer. Un tel substrat est réalisé en matériau rigide. Ce matériau peut être un matériau métallique, un matériau de type alliage métallique et/ou en un matériau de type céramique technique. Ce substrat peut par exemple être obtenu en alliage de cuivre, acier inoxydable, en métaux précieux, en titane, en alumine, en aluminate de strontium dopé ou non, en zircone stabilisée ou non, en matériau hybride organique-inorganique ou de manière générale en tout alliage métallique ou en toute céramique technique ou en tout composite utilisable dans le domaine de l'horlogerie. Par « *céramique technique* », on désigne les matériaux denses à base d'oxyde d'aluminium, et/ou d'oxyde de zirconium, et/ou d'oxyde de zirconium stabilisé, et/ou de nitrures, et/ou de carbures, et/ou d'aluminate de strontium notamment dopé. Par « *dense* », on considère un matériau dont la densité est comprise entre 95 % et 100 % de la densité théorique du matériau considéré. L'expression « à *base d'un certain* composé » signifiera que le matériau comprendra en poids au moins 50 % dudit composé.

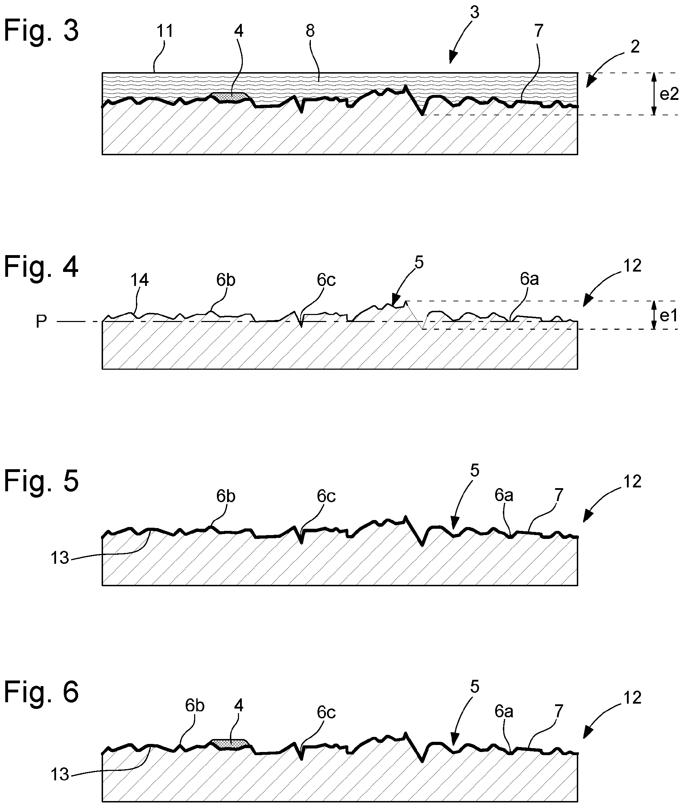

Cette étape d'élaboration 20 comprend aussi une sous-étape de génération 22 de données topographiques de construction de la structure tridimensionnelle 5 dans la face supérieure 13 de l'ébauche 12. En référence à la figure 4, cette structure tridimensionnelle 5 comprend :
- au moins une zone plane 6a ; et/ou
- au moins une zone en relief 6b c'est-à-dire comprenant au moins un relief ; et/ou
- au moins une zone en creusure 6c c'est-à-dire comprenant au moins une creusure, cette creusure peut aussi être aussi nommée nervure.

On notera que ces zones 6a, 6b, 6c sont définies par rapport à une surface de référence de l'ébauche 12. Cette surface de référence est exiguë et plane et elle est comprise dans la face supérieure 13 de l'ébauche 12 lorsque celle-ci n'a pas encore été modifiée pour réaliser la structure tridimensionnelle 5. Cette surface de référence est comprise dans un plan P visible sur la figure 4. Dans cette configuration, la zone plane 6a est comprise dans la surface de référence et donc dans le plan P, la zone en relief 6b au-dessus de la surface de référence et la zone en creusure 6c en-dessous de cette surface.

Une telle sous-étape 22 est mise en oeuvre par un système de génération de ces données topographiques de construction de la structure tridimensionnelle 5. Ce système comprend de manière non exhaustive et non limitative, un contrôleur et un module de communication ainsi qu'une base de données comprenant les données topographiques de paysage encore appelées données topographiques brutes.

Dans ce système, le contrôleur aussi appelée unité de traitement, comporte un circuit électronique comprenant des ressources matérielles en particulier au moins un processeur coopérant avec des éléments de mémoire ainsi que des bus d'adresses, de données et de contrôle. Ce contrôleur comprend dans ses éléments de mémoire un algorithme de génération de données topographiques de construction de la structure tridimensionnelle 5. Un tel algorithme est exécuté par le processeur de ce contrôleur en tenant compte de critères de calcul tels que la surface de la face supérieure 13 de l'ébauche 12, de la forme essentielle de cette face 13, les dimensions de cette face 13 et/ou de la nature du matériau du substrat constituant cette ébauche 12. Ces critères peuvent également comprendre des caractéristiques de perception visuelle par un observateur de la structure tridimensionnelle de la face supérieure 13 constituant la représentation tridimensionnelle 3 dudit paysage. On notera qu'un tel algorithme en étant appliqué aux données topographiques brutes, participe notamment à une mise à l'échelle de la représentation tridimensionnelle 3 du paysage à des dimensions prédéterminées, à savoir les dimensions de l'ébauche 12 et en particulier celles de sa face supérieure 13.

Ce contrôleur est connecté à la base de données par l'intermédiaire du module de communication. Pour ce faire, le module de communication qui est relié au contrôleur, comprend des éléments de liaison filaire ou sans fil le connectant à la base de données.

Dans ce contexte, la sous-étape de génération 22 comprend une phase de récupération 23 des données topographiques brutes relatives au paysage devant servir à la réalisation de la structure tridimensionnelle 5 dans la face supérieure 13 de l'ébauche 12. Lors de cette phase 23, le contrôleur récupère donc ces données topographiques brutes en établissant une connexion avec la base de données comportant de telles données topographiques en rapport avec le paysage à structurer sur cette ébauche 12.

Cette sous-étape 22 comprend ensuite une phase d'obtention 24 des données topographiques de construction à partir d'un traitement de données topographiques brutes relatives audit paysage, le traitement étant réalisé par l'algorithme qui est exécuté par le contrôleur. Plus précisément, lors de cette phase 24, le contrôleur réalise alors des opérations de calcul sur les données topographiques brutes en exécutant ledit algorithme. De tels opérations de calcul visent à obtenir les données topographiques de construction tenant compte notamment de la surface de la face supérieure 13 de l'ébauche 12, de la forme essentielle de cette surface, de la nature du matériau du substrat constituant cette ébauche 12 et de caractéristiques de perception visuelle par un observateur de la structure tridimensionnelle 5 de la face supérieure 13 constituant la représentation tridimensionnelle 3 dudit paysage. Ces caractéristiques de perception visuelle participent à améliorer le rendu visuel de cette structure 5 de la face supérieure 13 à réaliser. Ces caractéristiques concernent par exemple l'accentuation ou l'amélioration du contraste perçu par un observateur visualisant cette structure tridimensionnelle 5 et ce, en modifiant les valeurs des données topographiques brutes afin de faire varier les dimensions des différentes zones 6a, 6b, 6c de cette structure 5 à savoir les zones planes 6a, en relief 6b et/ou en creusure 6c. A titre d'exemple, l'algorithme peut augmenter les contrastes dans au moins une zone plane 6a de la structure 5 en modifiant de manière équilibrée au moins une zone en creusure 6c et/ou au moins une zone en relief 6b relativement à la moyenne des zones 6a à 6c localisées autour de ladite au moins une zone modifiée 6b, 6c. Dans ce contexte, ladite au moins une zone modifiée 6b, 6c c'est-à-dire ici ladite au moins une zone de creusure 6c et ladite au moins une zone de relief sont modifiées respectivement en profondeur et en hauteur/altitude.

De telles données topographiques de construction comportent chacune des informations spatiales de mesure en trois axes perpendiculaires X, Y et Z, avec les axes horizontales X et Y, et l'axe Z qui est un axe vertical. Dans le contexte de l'invention, ces informations concernent pour l'axe X la longitude, pour l'axe Y la latitude et pour l'axe Z l'altitude/hauteur d'un relief ou la profondeur d'une creusure. Ces données topographiques de construction permettent de modéliser la structure tridimensionnelle 5 à former dans la face supérieure 13 de l'ébauche 12. Une telle modélisation de la structure tridimensionnelle 5 correspond à la représentation numérique de cette structure 5. Cette modélisation comprend un nuage de points formant la structure tridimensionnelle 5 de l'ébauche 12. Dans ce contexte, chaque donnée topographique de construction est une coordonnée dans l'espace d'un point de ce nuage.

Ainsi que nous l'avons évoqué précédemment, l'algorithme exécutée par le contrôleur participe à l'obtention des données topographiques de construction. Dans ce contexte, cet algorithme est configuré pour mettre en oeuvre des fonctions mathématiques en particulier :
- des fonctions polynomiales dans l'axe z ;
- des fonctions mathématiques configurées pour augmenter ou diminuer une coordonnée en z en fonction de la moyenne d'ordre n en z des coordonnées voisines x et y ;
- des fonctions polynomiales dans l'axe z variable selon des dérivées/pentes de surfaces.

La sous-étape 22 prévoit ensuite une phase d'archivage 25 de ces données topographiques de construction, et donc de cette modélisation, dans un fichier informatique/numérique stocké dans les éléments de mémoire du contrôleur.

L'étape d'élaboration 20 comprend aussi une sous-étape de réalisation 26 de la structure tridimensionnelle 5 dans/sur la face supérieure 13 de l'ébauche 12. Une telle sous-étape 26 est notamment mise en oeuvre par un système de réalisation de cette structure 5 dans cette face supérieure 13 de l'ébauche 12. Ce système comprend une unité de contrôle, un module de communication et un dispositif de structuration de la face supérieure 13. Ce dispositif de structuration qui est piloté par l'unité de contrôle, peut comprendre un module d'usinage mécanique et/ou d'usinage laser, ou un module de frappe sur ébauches 12 de cadran 2. Dans ce contexte, l'étape d'élaboration 20 peut comprendre une sous-étape d'usinage de la face supérieure 13 par gravure laser de précision utilisant un laser femtoseconde.

Dans ce contexte, la sous-étape 26 comprend une phase de réception 27 du fichier informatique/numérique comprenant les données topographiques de construction, et donc la modélisation de la structure tridimensionnelle 5 dans la face supérieure 13 de l'ébauche du cadran 2. Lors de cette phase 27, le contrôleur du système de génération de données topographiques de construction transmet le fichier informatique/numérique à l'unité de contrôle par l'intermédiaire des modules de communication de ces deux systèmes.

Cette sous-étape 26 comprend ensuite une phase de structuration 28 de la face supérieure 13 de l'ébauche 12 sur la base des données topographiques de construction comprises dans le fichier reçu. En référence à la figure 4, lors de cette phase 28, l'unité de contrôle génère des instructions de pilotage du module d'usinage sur la base de ces données topographiques de construction, afin de réaliser la structure tridimensionnelle 5 dans la face supérieure de l'ébauche 12. Ces instructions de pilotage permettent de guider le module d'usinage dans/sur la face supérieure 13 de l'ébauche 12 afin d'y reproduire point par point la structure tridimensionnelle 5 et ce afin qu'elle soit conforme à sa modélisation.

On remarquera que dans une variante où la réalisation de cette structure tridimensionnelle 5 est effectuée par le module de frappe, ce module comprend une matrice pourvue d'une empreinte relative à cette structure 5. Plus précisément, cette empreinte peut être réalisée par le module d'usinage sur la base des instructions de pilotage permettant de guider ce module d'usinage dans/sur la face de cette matrice destinée à recevoir une telle empreinte.

On notera que l'épaisseur e1 de cette structure tridimensionnelle réalisé dans la face supérieure de l'ébauche visible sur la figure 4, est de préférence comprise entre 10¹ et 10³ µm.

Une telle structure 5 tridimensionnelle est réalisée sur sensiblement toute la face supérieure 13 de cette ébauche 12. Plus précisément, cette structure 5 est réalisée sur 80% ou 90% de cette face supérieure 13 voire sur toute la face supérieure 13. Autrement dit, cette structure tridimensionnelle 5 occupe entre 15% et 100% de la face supérieure 13.

Le procédé comprend ensuite une étape de traitement 29 de la surface 14 de la structure tridimensionnelle 5 de l'ébauche 12 lors de laquelle au moins une caractéristique d'aspect de cette surface 14 est modifiée. Une telle étape 29 vise à façonner/modifier les caractéristiques d'aspect de cette surface 14 comprenant de manière non limitative et non exhaustive, le degré de rugosité, le degré de brillance et/ou la couleur de cette surface 14. Plus précisément, cette étape 29 permet de modifier au moins une de ces caractéristiques sur toute cette surface 14 ou sur au moins une portion de cette surface 14.

Cette étape de traitement 29 contribue à modifier les propriétés optiques (ex. : réflexion lumineuse, répartition lumineuse sur cette surface 14, etc.) et les propriétés esthétiques de cette surface 14 de la structure 5 afin d'améliorer la perception visuelle des différentes zones 6a, 6b, 6c qui la constituent, en particulier en participant à rendre visible les détails du paysage reproduit par cette structure tridimensionnelle 5.

Pour ce faire, cette étape 29 comporte une sous-étape de modification 30 de l'état de surface 14 de tout ou partie de la structure tridimensionnelle 5 et une sous-étape de dépôt 31 d'un revêtement 7 sur la surface 14 de tout ou partie de la structure tridimensionnelle 5. La sous-étape de modification 30 peut être mise en oeuvre indifféremment avant ou après la sous-étape de dépôt 31 selon le traitement à apporter à la surface 14 de cette structure 5 ou à au moins une des portions constituant une telle surface 14.

La sous-étape de modification 30 vise à modifier les caractéristiques de cette surface 14 comprenant de manière non limitative et non exhaustive, le degré de rugosité et/ou le degré de brillance et/ou la couleur de cette surface 14. Lors d'une telle sous-étape 30, des opérations de traitement de la surface 14 sont mises en oeuvre telles que des opérations de sablage à sec, de sablage humide, de microbillage, de soleillage, de ponçage, de polissage, satinage, brossage, d'attaque chimique ou une combinaison d'au moins deux de ces opérations. De telles opérations peuvent être réalisées sur toute la surface 14 de la structure tridimensionnelle 5 ou sur au moins une portion de cette surface 14. Autrement dit, de telles opérations permettent de modifier sélectivement la surface 14 de cette structure 5.

S'agissant de la sous-étape de dépôt 31, elle vise à modifier la caractéristique de cette surface 14 relative à la couleur. Cette sous-étape 31 peut aussi participer à modifier le degré de rugosité et/ou de brillance de cette surface 14. Lors d'une telle sous-étape 31, des opérations d'application d'un revêtement 7 de matière de type métallique ou encore de type résine sont réalisées sur cette surface 14 ou sur au moins une des portions de cette surface 14. Autrement dit, de telles opérations permettent d'appliquer sélectivement le revêtement 7 sur la surface 14 de cette structure 5. Ce revêtement 7 peut être composé d'une seule et unique couche ou encore d'un ensemble de couches superposées afin de répondre à des contraintes esthétiques et/ou techniques. On notera qu'un tel revêtement 7 présente une épaisseur comprise entre 10⁻² µm et 10² µm.

Lorsqu'il s'agit d'une matière de type métallique, elle peut être appliquée par voie sèche ou par voie humide à partir d'au moins une des opérations suivantes : par PVD (sigle provenant du procédé connu par la dénomination anglaise « *Physical Vapor Déposition* »), par CVD (sigle provenant du procédé connu par la dénomination anglaise « *Chemical Vapor Déposition* »), par ALD (sigle provenant du procédé connu par la dénomination anglaise « *Atomic Layer Déposition* »), par LBL (sigle provenant du procédé connu par la dénomination anglaise « *Layer by Layer* »), par ink-jet, par dip-coating, par pinceau, par dispenser, par sprayage, par nébulisation ou par procédé sol-gel, par procédé chimique ou par procédé électrochimique de type galvanoplastie. On notera qu'une telle matière métallique peut être par exemple un alliage métallique ou encore un oxyde métallique. Plus précisément cette matière peut être de manière non limitative et non exhaustive de l'or, l'argent, du ruthénium, du rhodium, du nickel, du cuivre, du titane, du chrome, de l'oxyde de chrome, de l'oxyde de titane, de l'oxyde de silicium.

Lorsqu'il s'agit d'une matière de type résine, elle peut être appliquée sur la surface 14 de la structure tridimensionnelle 5 à partir d'au moins une des opérations suivantes : par pulvérisation, par immersion ou encore par coulage. Une telle matière de type résine peut être transparente et/ou colorée. Cette résine peut être de manière non limitative et non exhaustive une résine acrylique, nitrocellulosique, époxy ou encore polyuréthane.

Par la suite, le procédé comprend une étape de réalisation 32 d'au moins un motif 4 sur la surface 14 traitée de la structure tridimensionnelle 5. Une telle étape 32 comprend une sous-étape d'impression 33 de matière constituant ledit motif 4. Cette matière est formée d'un polymère tel qu'une résine, et de particules. Ces particules peuvent être des particules organiques, métalliques, organométalliques, rocheuses, luminescentes, phosphorescentes ou inerte. S'agissant de la résine, elle peut être de manière non limitative et non exhaustive une résine acrylique, nitrocellulosique, époxy ou encore polyuréthane. On notera que cette sous-étape d'impression 33 est effectuée à partir d'opérations de décalque, également appelée tampographie ou impression par transfert, ou encore à partir d'opérations de sérigraphie. On notera qu'un tel motif 4 peut être bidimensionnel ou tridimensionnel. Ce motif 4 est plus précisément une représentation graphique pouvant être de manière non limitative et non exhaustive relative à :
- un élément de marquage, comme par exemple un index ou un chiffre graduant le temps, participant à la réalisation d'une fonction horlogère comme l'indication d'une heure ou d'une date ;
- une inscription ;
- une image.

Un tel motif 4 peut être une motif invisible susceptible d'être révélé à la demande. En effet, il peut s'agir d'un motif fluorescent qui n'est rendu visible que lorsqu'il est soumis à un rayonnement ultraviolet.

Un tel procédé comprend également une étape d'encapsulation 34 de tout ou partie de la surface 14 de la structure tridimensionnelle 5. Lors de cette étape 34, une couche d'encapsulation 8 est appliquée sur toute cette surface 14 ou uniquement sur ledit au moins un motif 4. Cette couche 8 présente de préférence une épaisseur qui est supérieure à celle du motif 4. L'épaisseur d'une telle couche est comprise entre 1 et 500 µm. Une telle couche d'encapsulation 8 est de préférence formée par une résine telle qu'une résine époxy. Dans d'autres alternatives, cette résine peut être une résine acrylique, nitrocellulosique ou encore polyuréthane. On notera que l'application d'une telle couche 8 sur cette surface 14 participe notamment à assurer sa protection contre l'usure du temps et à améliorer le rendu visuel de la structure tridimensionnelle 5 en lui donnant de la profondeur. En complément, une telle couche 8 participe à améliorer la robustesse, car les cadrans ainsi décorés sont susceptibles d'être des composants d'habillement soumis aux chocs et à l'environnement parfois agressif (humidité, poussière, etc.).

Le procédé comprend ensuite une étape de finalisation/terminaison 35 de l'ébauche 12 en vue d'obtenir ce cadran 2. Lors de cette étape 35 des opérations de finalisation sont mises en oeuvre telles que :
- une opération d'usinage de l'ébauche visant à dimensionner si nécessaire cet ébauche 12 pour son montage dans le boitier 13 de la montre 1 ;
- une opération d'usinage du cadran 2 afin de réaliser une ouverture traversante pour le passage d'un axe d'entrainement des aiguilles 15 ;
- une opération de polissage de l'ébauche 12 ;
- une opération de traitement galvanique pour protéger les parties brutes de l'ébauche 12, c'est-à-dire les parties du substrat ayant été révélées lors de l'opération d'usinage ;
- une opération de décalque directement sur la couche d'encapsulation en utilisant une résine utilisée de nature acrylique, nitrocellulosique, polyuréthane ou encore époxy ;
- une opération de pose applique/index si cela n'a pas encore été réalisée. Ces appliques peuvent être directement collées sur le l'ébauche ou collées via des pièces traversant le cadran via des trous créés lors de l'opération d'usinage.

Ainsi un tel procédé permet de fabriquer un cadran 2 comprenant un décor présent sur sa face visible 11 constituée par la reproduction détaillée d'un paysage sur la base de données topographiques relatives à ce paysage. Ce décor comprend la représentation tridimensionnelle 3 présentant une épaisseur e2, visible sur la figure 3, qui est de préférence comprise entre 10¹ µm et 10⁴ µm, de préférence 10³ µm.

### Nomenclature

1. Montre
2. Cadran
3. Décor tridimensionnel, représentation tridimensionnelle
4. Motif
5. Structure tridimensionnelle
6a. Zone plane
6b. Zone en relief
6c. Zone en creusure
7. Revêtement
8. Couche d'encapsulation
9. Carrure
10. Bracelet
11. Face visible
12. Ebauche de cadran
13. Face supérieure de l'ébauche
14. Surface de la structure tridimensionnelle
15. Aiguilles
16. Boitier

## Revendications

1. Procédé de fabrication d'un cadran (2) de montre (1) comportant une face visible (11) ayant une surface exiguë, ladite face (11) comprenant une représentation tridimensionnelle (3) d'un paysage notamment une carte topographique de ce paysage, le procédé comprenant les étapes suivantes :
- élaboration (20) d'une ébauche (12) de ce cadran (2) comprenant une face supérieure (13) pourvue d'une structure tridimensionnelle (5) relative à ladite représentation tridimensionnelle (3) du paysage, ladite étape d'élaboration (20) comprenant une sous-étape de génération (22) de données topographiques de construction de ladite structure tridimensionnelle 5 dans cette face supérieure (13) ;
- traitement (29) d'une surface (14) de cette structure tridimensionnelle (5) de la face supérieure (13) de l'ébauche (12) lors de laquelle au moins une caractéristique d'aspect de cette surface (14) est modifiée en prévision de l'obtention de la représentation tridimensionnelle (3) ;
- terminaison (35) de l'ébauche (12) en vue d'obtenir le cadran. (2).

2. Procédé selon la revendication précédente dans lequel la sous-étape de génération (22) comprend une phase d'obtention (24) desdites données topographiques de construction à partir d'un traitement de données topographiques brutes relatives audit paysage, réalisé par un algorithme de génération de données topographiques de construction exécuté par un contrôleur d'un système de génération de telles données.

3. Procédé selon la revendication précédente dans lequel ladite phase d'obtention (24) met en oeuvre des opérations de calcul pour la détermination des données topographiques de construction en fonction de la dimension de la surface de la face supérieure (13) de l'ébauche (12), de la forme essentielle de cette surface, de la nature du matériau du substrat constituant cette ébauche (12) et de caractéristiques de perception visuelle par un observateur de la structure tridimensionnelle (5) de la face supérieure (13) constituant la représentation tridimensionnelle (3) dudit paysage.

4. Procédé selon la revendication précédente dans lequel ladite phase d'obtention (24) met en oeuvre une opération de modification des valeurs des données topographiques brutes engendrant une variation des dimensions de différentes zones (6a, 6b, 6c) de cette structure (5) à savoir des zones planes (6a), en relief (6b) et/ou en creusure (6c).

5. Procédé selon l'une quelconque des revendications 2 à 4 dans lequel l'étape d'élaboration (20) comprend une sous-étape de réalisation (26) de la structure tridimensionnelle (5) dans la face supérieure (13) de l'ébauche (12), ladite sous-étape (26) comprenant une phase de structuration (28) de la face supérieure (13) de l'ébauche (12) à partir des données topographiques de construction obtenues.

6. Procédé selon l'une quelconque des revendications précédentes dans lequel l'étape de traitement (29) comprend une sous-étape de modification (30) de l'état de surface (14) de tout ou partie de la structure tridimensionnelle (5).

7. Procédé selon l'une quelconque des revendications précédentes dans lequel l'étape de traitement (29) comprend une sous-étape de dépôt (31) d'un revêtement (7) sur la surface (14) de tout ou partie de la structure tridimensionnelle (5).

8. Procédé selon l'une quelconque des revendications précédentes comprenant une étape de réalisation (32) d'au moins un motif (4) sur la surface (14) traitée de la structure tridimensionnelle (5).

9. Procédé selon l'une quelconque des revendications précédentes comprenant une étape d'encapsulation (34) de tout ou partie de la surface (14) de la structure tridimensionnelle (5).

10. Procédé selon l'une quelconque des revendications précédentes, dans lequel ledit paysage reproduit est un paysage réel et/ou un paysage existant.

11. Procédé selon l'une quelconque des revendications précédentes dans lequel ladite surface exiguë présente une aire comprise entre 700 et 1700 mm².

12. Cadran (2) comportant une face visible (11) comprenant une représentation tridimensionnelle (3) d'un paysage, susceptible d'être obtenu à partir du procédé selon l'une quelconque des revendications précédentes.

13. Montre (1) comportant un cadran (2) selon la revendication précédente.

14. Montre (1) selon la revendication précédente est une montre bracelet.
